# EUROPEAN PATENT APPLICATION

(11) **EP 1 679 116 A1**
(43) Date of publication of application: **12.07.2006**
(21) Application number: 04770997.7
(22) Date of filing: 28.07.2004
(51) Int. Cl.: B01J 20/26, B01J 45/00, B01J 39/20, C08F 220/34, C08F 220/56

(54) **LIGHT- AND HEAT-RESPONSIVE ADSORBENTS AND PROCESS FOR RECOVERY OF SOLUTES**

(30) Priority: 09.09.2003 JP 2003316307
(71) Applicant: Tokyo Denki University, Chiyoda-ku, Tokyo 101-8457 (JP)
(72) Inventor: SUZUKI, Takayuki, Motono-mura, Inba-gun, Chiba 270-2329 (JP)
(74) Representative: Grünecker, Kinkeldey, Stockmair & Schwanhäusser Anwaltssozietät
(86) International application number: PCT/JP2004/010734
(87) International publication number: WO 2005/025740

(57) **Abstract**

A light- and heat-response adsorbent, having an optically responding ability reversibly showing transition to adsorption and release of a soluble substance in a soluble-substance solution in response to whether light is irradiated or not and a thermally responding ability reversibly showing transition to solubilization and precipitation, or swelling and contraction, in response to temperature, preferably containing a copolymer of monomers including 1',3',3'-trimethyl-6-(acryloyloxy)spiro(2H-1-benzopyran-2,2 '-indole] and N-isopropylacrylamide. Thus, the invention provides an adsorbent functioning both to adsorb and release a soluble substance from and into solution and having higher soluble-substance recovery efficiency.

## Description

### Technical Field

The present invention relates to a light- andheat-response adsorbent and a method of recovering a soluble substance such as metal ion.

### Background Art

Recently, there is a need for a method of recovering soluble substances such as metal ions, in particular heavy metal ions such as lead ion, efficiently from industrial wastewater and industrial waste discharged from factories, for example, for prevention of environmental pollution, reduction of the amount of industrial wastes, and resource recycling.

For purification of wastewater containing metal ions, methods such as neutralization, aggregation and sedimentation method, sodium sulfide method, heavy metal scavenger method, and ferrite method are used in practice. The wastewater is usually further processed in metal-recovering step and recycling steps after processing by these methods.

In the heavy metal scavenger method among them, a scavenger (e.g., a cyan compound), which forms a complex with heavy metal ions, is used. After collection, the metal ions adsorbed on the scavenger are liberated by chemical reaction treatment of the scavenger, for example by oxidation, isolated as metal cations in the solution, and then purified and recovered.

The chemical reaction treatment in the heavy metal-recovering step after collection of heavy metals by such a scavenger demanded not only professional knowledge and technology, but also tedious operation, extended processing time, and greater processing cost.

Noticing the optically responding phenomenon of compounds showing photochromism, i.e., changing color reversibly in response to whether light is irradiated or not on the compound (hereinafter, referred to as photochromic compound) that metal ions are adsorbed reversibly thereon by forming a complex therewith in response to visible light, proposed was a metal ion adsorbent that functions as both of collection and recovery of metal ions in solution at the same time (e.g., Japanese Patent Application Laid-Open No. 2003-053185).

### Disclosure of Invention

However, adsorbents containing such a photochromic compound as its copolymer segment are mostly insoluble in polar solvents such as water when they are complexed with metal ions, and thus, had a problem that the release efficiency of the metal ions complexed inside the insoluble adsorbent is lower, because, when light is irradiated on the insoluble adsorbent for release of metal ions, the light seldom reaches inside.

Thus, an object of the present invention is to provide an adsorbent that becomes dissolved in solvent in state of retaining adsorption of a soluble substance such as metal ion so that the irradiated light reaches entire solution and the soluble substance can be recovered efficiently.

The inventor has found that it was possible to control the adsorbent by using therein a copolymer segment having a property of showing phase transition reversibly in response to temperature (hereinafter, referred to as thermal response), for example, acompoundthat reversiblybecomes soluble and insoluble in solvent, established conditions for preparing it, and completed the present invention.

Thus, the present invention relates to the following inventions (1) to (18):

(1) A light- and heat-response adsorbent, having an optically responding ability reversibly showing transition to adsorption and release of a soluble substance in a soluble-substance solution in response to whether light is irradiated or not and a thermally responding ability reversibly showing transition to solubilization and precipitation, or swelling and contraction, in response to temperature.

(2) The light- and heat-response adsorbent according to the above item (1), wherein the soluble substance in the solution is a metal ion, metal complex ion, hydrogen ion or amino acid, and the metal is selected from lead, zinc, copper, nickel, palladium, lithium, cadmium, arsenic, chromium, mercury, beryllium, vanadium, manganese, cobalt, iron, gold, silver, and platinum.

(3) The light- and heat-response adsorbent according to the above item (1), wherein the soluble substance in the solution is a metal ion and the metal is selected from lead, zinc, copper, nickel, and palladium.

(4) The light- and heat-response adsorbent according to any one of the above items (1) to (3), wherein the adsorbent include a copolymer that becomes insoluble or scarcely-soluble and soluble reversibly in response to temperature and adsorbs and releases the soluble substance reversibly in response to whether light is irradiated or not in a hydrogen-bonding solvent.

(5) The light- and heat-response adsorbent according to any one of the above items (1) to (3), wherein the adsorbent include a copolymer that contains a crosslinking agent and becomes swelling and contraction reversibly in response to temperature and adsorbs and releases the soluble substance reversibly in response to whether light is irradiated or not in a hydrogen-bonding solvent.

(6) The light- and heat-response adsorbent according to the above item (4) or (5), wherein the copolymer contains segments (a) and (b) represented by the following Formula (1):

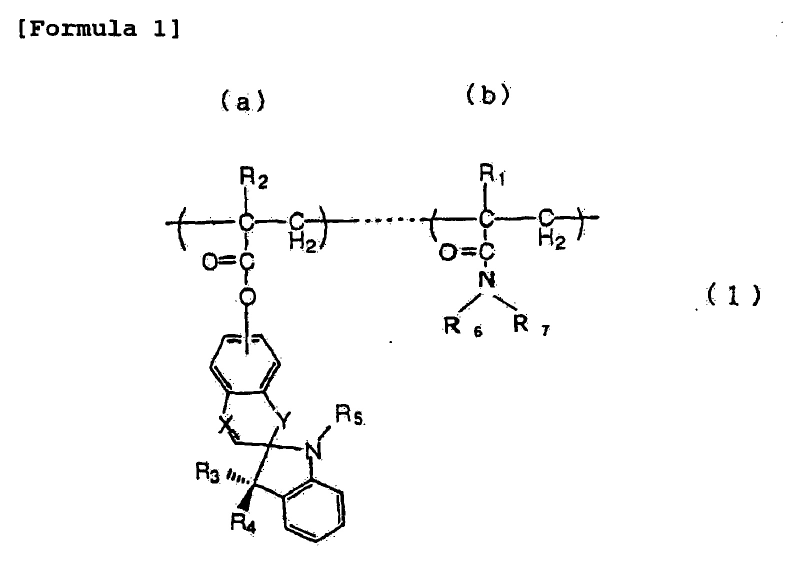

(in Formula (1), R₁, R₂, R₃ and R₄ each independently represent a H atom or a CH₃ group; R₅ represent an alkyl, hydroxyl, carboxyl, amino, aldehyde or amide group; R₆ and R₇ each independently represent a H atom, an alkyl or cycloalkyl group that may be substituted with an organic group containing hetero atoms, or R₆ and R₇ may be an alkylene group in which they are bound to each other; X represents a carbon or nitrogen atom; and Y represents an oxygen or sulfur atom).
(7) The light- and heat-response adsorbent according to the above item (6), wherein R₅ in Formula (1) above represents an alkyl or amide group.

(8) The light- and heat-response adsorbent according to the above item (6) or (7), wherein the copolymer is a copolymer of monomers including 1',3',3'-trimethyl-6-(acryloyloxy)spiro(2H-1-benzopyran-2,2 '-indole) and N-isopropylacrylamide.

(9) A method of recovering a soluble substance, comprising:
a step of preparing a solution of the light- and heat-response adsorbent according to any one of the above items (1) to (8) in dark place and at a temperature lower than the transition temperature of the adsorbent,
a step of precipitating the copolymer in the adsorbent in the solution by heating the adsorbent solution in dark place and at a temperature higher than the transition temperature and then forming the precipitated copolymer complex with an added metal ion in the liquid or
a step of forming the copolymer complex with the added metal ion in the adsorbent solution in dark place and at a temperature lower than the transition temperature, and then precipitating the complexed copolymer at a temperature higher than the transition temperature in the solution by heating,
a step of separating the precipitated complexed copolymer from the solution continuously in dark place at the high temperature,
a step of dissolving the separated copolymer in a solvent by cooling it in dark place to a temperature lower than the transition temperature to obtain a solution,
a step of liberating the metal ion from the copolymer by irradiating the solution with visible light at a temperature lower than the transition temperature,
a step of precipitating the copolymer by heating the solution to a temperature higher than the transition temperature while irradiating the solution with visible light continuously, and
a step of separating the precipitated copolymer from the solvent while irradiating the solution with visible light at the high temperature continuously.

(10) The method of recovering a soluble substance according to the above item (9), wherein the aqueous metal-ion solution and the solution of the light- and heat-response adsorbent in the hydrogen-bonding solvent are mixed in the complex-forming step.

(11) Amethodof recovering a soluble substance, comprising recovering a soluble substance from a solution containing the soluble substance into a recovery solvent by using the light-and heat-response adsorbent according to any one of the above items (1) to (8).

(12) The method of recovering a soluble substance according to the above item (11), comprising:
a step (A) of preparing an adsorption compound by making the soluble substance adsorb onto the copolymer in the light-and heat-response adsorbent in the liquid,
a step (B) of separating the adsorption compound from the liquid by solid-liquid separation,
a step (C) of adding the separated adsorption compound into a recovery solvent,
a step (D) of liberating the soluble substance from the copolymer with use of the optically responding ability, and
a step (E) of removing the copolymer from the recovery solvent.

(13) Themethodof recovering a soluble substance according to the above item (12), wherein the soluble substance is liberated by irradiation with visible light on the adsorption compound dissolved or swollen in the recovery solvent at a temperature lower than the transition temperature of the adsorbent in the step (D) of liberating the soluble substance from the copolymer.

(14) The method of recovering a soluble substance according to the above item (12) or (13), wherein:
the steps (A) to (C) are performed in dark place;
the adsorption compound precipitated in the solvent at a temperature higher than the transition temperature is collected by solid-liquid separation in the step (B);
the separated adsorption compound is dissolved in a recovery solvent at a temperature lower than the transition temperature in the step (C); and
the dissolved copolymer is precipitated by heating the recovery solvent at a temperature higher than the transition temperature and collected by solid-liquid separation while irradiated with visible light continuously in the step (E).

(15) The method of recovering a soluble substance according to the above item (12) or (13), wherein the steps (A) to (C) are performed in dark place; and the liberated swollen or shrunk copolymer is removed by solid-liquid separation while irradiated with visible light continuously in the step (E).

(16) The method of recovering a soluble substance according to the above item (12), (13) or (14), further comprising:
a step of precipitating the obtained adsorption compound by heating it at a temperature higher than the transition temperature in dark place after the step (A) or
a step of precipitating the copolymer by heating the solution containing the dissolved copolymer to a temperature higher than the transition temperature in dark place before the step (A).

(17) The method of recovering a soluble substance according to the above item (12), (14) or (15), wherein an aqueous solution of soluble substance and a solution of the light- and heat-response adsorbent in a hydrogen-bonding solvent are mixed in the step (A).

(18) Themethod of recovering a soluble substance according to any one of the above items (11) to (17), wherein the soluble substance to be recovered is a metal ion, metal complex ion, hydrogen ion or amino acid, and the metal is selected from lead, zinc, copper, nickel, palladium, lithium, cadmium, arsenic, chromium, mercury, beryllium, vanadium, manganese, cobalt, iron, gold, silver, and platinum.

### Brief Description of the Drawings

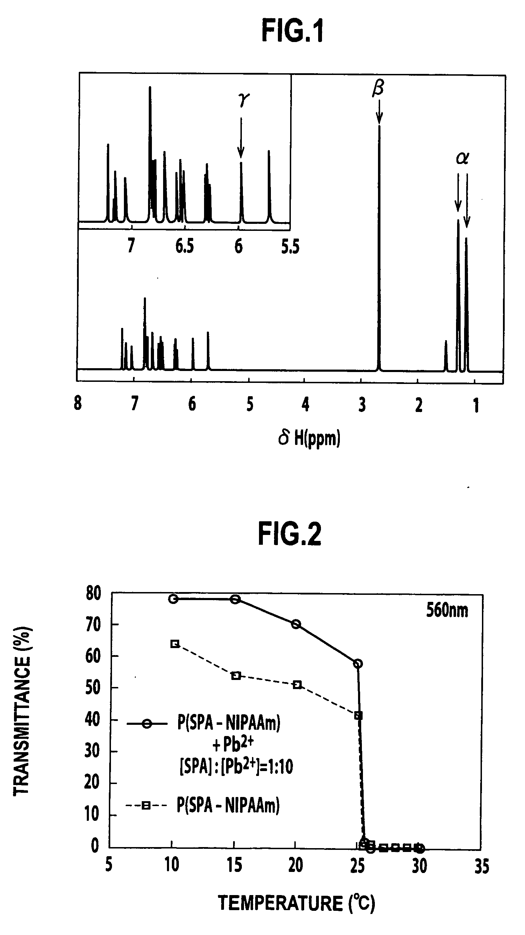

Fig. 1 is a graph showing the results obtained by analyzing the SPA prepared in an Example of the present invention by ¹H-NMR.
Fig. 2 is a graph showing the light transmittance of a copolymer P(SPA-NIPAAm) solution having thermal and optically responding ability (SPA: 4 mol/%) (broken line) and the solution containing a bivalent lead ion additionally added (solid line), as determined at 10 to 30°C and at a wavelength of 560 nm.

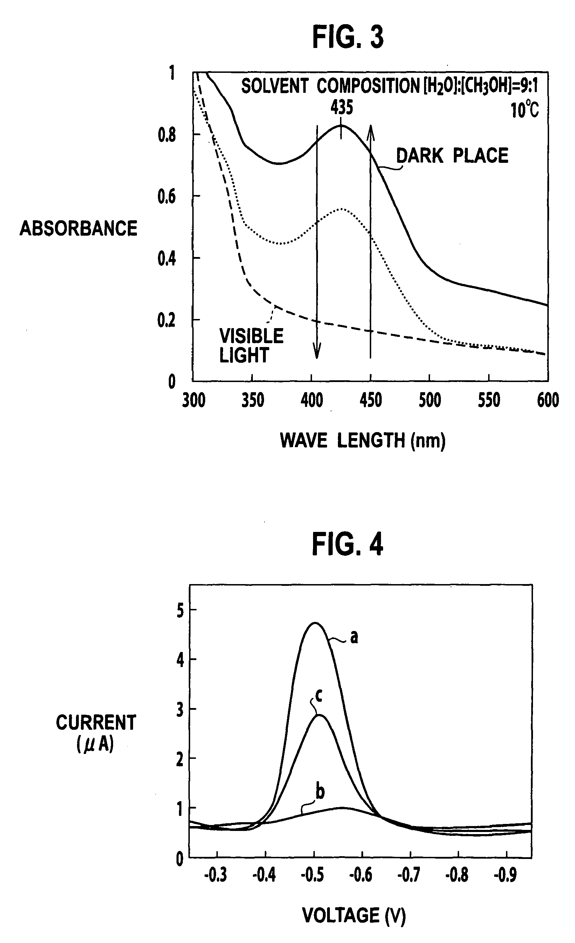

Fig. 3 is a graph showing the absorbance of the copolymer P(SPA-NIPAAm) solutions used in Fig. 2 at 10°C in which the solution is in the complexed yellow state when bivalent lead ion is added to the solution in dark place (solid line), in the lead ion-released state by visible light irradiation thereof (broken line), and in the intermediate state between them (dotted line).
Fig. 4 is a graph showing adsorption and desorption of bivalent lead ion at 10°C; and a shows the reduction potential and current (silver /silver chloride electrode) of aqueous 40-µM bivalent-lead-ion solution; b, the reduction current of the solution prepared by adding the copolymer P (SPA-NIPAAm) solution to the solution a and heating and filtering the resulting solution in dark place; and c, the reduction current of the solution prepared by adding the copolymer to the solution a, and then heating and filtrating the resulting solution under visible light irradiation.

### Best Mode for Carrying Out the Invention

Hereinafter, favorable embodiments of the present invention will be described.

The light- and heat-response adsorbent according to the present invention characteristically has an optically responding ability reversibly showing transition to adsorption and release of a soluble substance in a soluble-substance solution in response to whether light is irradiated or not and a thermally responding ability reversibly showing transition to solubilization and precipitation, or swelling and contraction, in response to temperature change.

The method of recovering a soluble substance according to the present invention is characterized by recovering a soluble substance from a solution containing the same into a recovery solvent by using the adsorbent according to the present invention.

The method will be described below, taking a case where the soluble substance to be recovered is a metal ion and the phase transition caused by temperature is between solubilization and precipitation.

For recovery of a metal ion, a metal ion in a metal-ion solution is adsorbed in dark place on a copolymer containing the adsorbent according to the present invention by complex formation, for example, by using the optically responding ability reversibly showing adsorption and release of a soluble substance in response to whether light is irradiated or not; and the complex thus formed is then collected by solid-liquid separation and redispersed in a recovery solvent. Then, the metal ion is released from the copolymer by irradiation of visible light on the complex.

For that purpose, the copolymer in the adsorbent is preferably insoluble or hardly soluble, more preferably insoluble, in the solvent at least when the copolymer, either complexed or not complexed with the metal, is removed from the solvent and soluble in the solvent at least when the metal ion is released, from the point of processability.

The copolymer in the adsorbent according to the present invention preferably precipitates into transition to an insoluble or hardly soluble form, independent of whether metal ion is adsorbed, when the copolymer solution is heated to a temperature higher than a particular temperature inherent to the copolymer, and the precipitated copolymer returns back into transition to the dissolved state when the solution is cooled to a temperature lower than the temperature. Such a boundary temperature of phase transition in thermal response will be referred to also as a transition temperature.

Thus, the copolymer preferably shows a thermal response of phase transition reversible between an insoluble or scarcely soluble form and a soluble form in a hydrogen-bonding solvent in response to the change of temperature. In the present invention, the hydrogen-bonding solvent is a solvent that enables to interact by hydrogen bonding; and examples thereof include alcohols and water and water is particularly preferable. The hydrogen-bonding solvent may be a mixed solvent of two or more.

Thus, for example, in dark place and at a temperature higher than the transition temperature, the adsorbent remains precipitated as it is insoluble or hardly soluble in liquid. A metal ion is added and adsorbed thereon by complex formation in dark place at the same temperature, and then, the complex is collected by solid-liquid separation, for example, by filtration. The insoluble or hardly soluble adsorbent obtained is redispersed in a solvent for recovery such as water. And the adsorbent is dissolved in the solvent when it is cooled to a temperature lower than the transition temperature, still in dark place. When visible light is irradiated on the entire solution sufficiently kept at the low temperature, the complexed metal ion is released from the adsorbent and released into the solvent at high yield. When the solution is reheated to a temperature higher than the transition temperature while the visible light is irradiated continuously, the adsorbent precipitates while the metal ion remains liberated. Separating the adsorvent by solid liquid separation while photoirradiation is continued at the high temperature leaves the metal ion recovered in the solvent. The precipitated adsorbent can be used repeatedly in recovery of the metal ion.

The light- and heat-response adsorbent according to the present invention, which contains a copolymer having both reversible optical and thermal responding abilities, allows efficient recovery of the metal ion repeatedly from metal-ion solutions. An adsorbent that reversibly changes its color simultaneously with adsorption or release of metal ions by the copolymer is more preferable in optically responding ability, from the point of processability.

In the present invention, a spiropyran or spirooxazine molecule that can form a merocyanine structure may be used as the photochromic compound that reversibly adsorbs a soluble substance such as metal ion in liquid and reversibly changes its color in response to visible light irradiation. In addition, for example, an N-alkyl (meth)acrylamide may be used for thermal response.

Thus, the copolymer contained in the adsorbent according to the present invention preferably contains a segment (a) represented by the following Formula (1) such as spiropyran or spirooxazine segment and a segment (b) such as N-alkyl (meth)acrylamide segment.

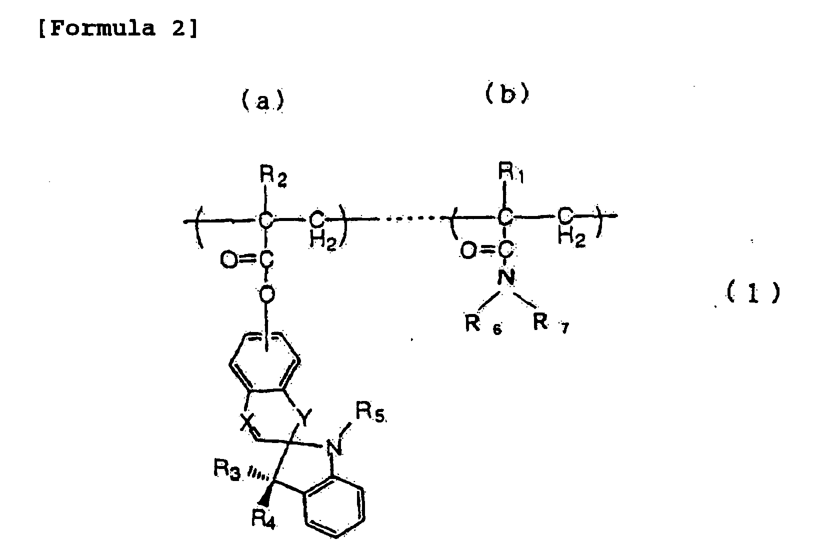

In Formula (1), R₁, R₂, R₃ and R₄ each independently represent a H atom or a CH₃ group; and the copolymer is an acrylate copolymer when each of R₁ and R₂ is a H atom and a methacrylate copolymer when it is a CH₃ group.

R₅ represents an alkyl, hydroxyl, carboxyl, amino, aldehyde or amide group. Typical examples of R₅ include methyl, ethyl, and dodecyl groups, and the like.

X represents a carbon or nitrogen atom; and Y represents an oxygen or sulfur atom.

In the segment (b), R₆ and R₇ each independently represent a H atom, an alkyl or cycloalkyl group that may be substituted with an organic group containing hetero atoms. However, R₆ and R₇ are not H atoms at the same time. Alternatively, R₆ and R₇ may be an alkylene group in which they are bound to each other. Typical examples of the alkyl groups of R₆ and R₇ include isopropyl, propyl, ethyl, and methyl groups; and those of the cycloalkyl groups include a cyclopropyl group and the like; those of the alkylene groups include butylene and pentylene groups and the like.

In particular, copolymers of monomers including 1',3',3'-trimethyl-6-(acryloyloxy)spiro(2H-1-benzopyran-2,2 '-indole) and N-isopropylacrylamide are preferable.

Polymerization of segments (a) and (b) is not particularly limited and may be block or random copolymerization.

For example in random copolymerization, the molar fraction (molar ratio) of the segment (a) to (b) is not particularly limited, and, when the fractions is expressed by n and (1-n), 0 < n s 0.5 is preferable. The molar fraction is not particularly limited, in the case of other copolymerization such as block or graft copolymerization. For example, even when n is approximately 0.8, the copolymer shows a sufficiently high thermal response if it has a region where the segment (b) is block polymerized.

Hereinafter, the invention will be described, taking a case when X in Formula (1) of the segment (a) is a carbon atom and Y an oxygen atom, i.e., when the copolymer has a spiropyran segment as the segment (a), as an example.

The spiropyran segment in the copolymer has an optically responding ability of reversibly isomerizing itself in the liquid between in the electrically-neutral colorless spiropyran structure and in the merocyanine structure having dipolar ions in the molecule by visible light irradiation. The spiropyran and merocyanine structures are shown in the following Formula (2). In Formula (2), M represent a metal that can be made a cation; and R₁ to R₅, X, and Y are the same as those in Formula (1).

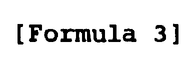

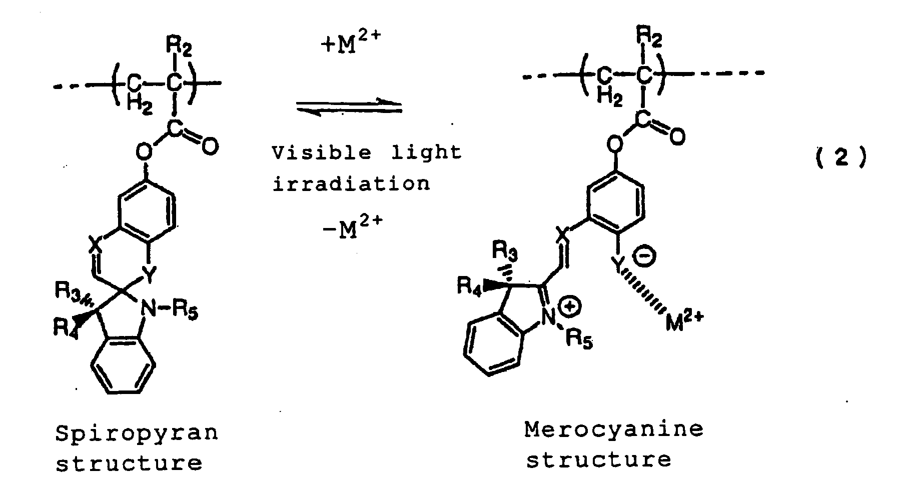

In dark place, the spiropyran segment in the copolymer isomerizes into the merocyanine structure and develops color. When a metal M cation is dissolved in the liquid, the oxygen atom in the merocyanine structure, i.e., Y atom in Formulae (1) and (2), which is higher in electron density, forms a complex with the metal cation at the site as shown in Formula (2).

The complex formation is eliminated when the merocyanine structure returns back to the spiropyran structure by visible light irradiation. Thus, when the copolymer in dark place is irradiated with visible light from outside, the merocyanine structure isomerizes back to the spiropyran structure by ring closure, and the copolymer becomes colorless when it is dissolved and white when insoluble or hardly soluble. The metal ion so far complexed becomes released in the liquid.

When the visible light irradiation is terminated and the copolymer is placed in dark place, the spiropyran segment in copolymer returns back into the merocyanine structure, complexing with the metal ion liberated and developing its color once again.

The segment (b) will be described next below. In the present invention, the copolymer, if it has a thermally responding segment (b) such as N-alkyl (meth) acrylamide segment, becomes insoluble or hardly soluble and precipitates according to temperature , for example, when the copolymer solution is heatedto a temperature higher than its transition temperature independent of whether emtal ion is adsorbed; and the precipitated copolymer redissloves when it is cooled to a temperature lower than the transition temperature.

Fig. 2 show a graph showing an example of the light transmittance at 10°C to 30°C and a wavelength of 560 nm, of a solution of the copolymer represented by Formula (1) consisting of the segment (a) of spiropyran acrylate (hereinafter, referred to also as SPA) and the segment (b) of N-isopropylacrylamide (hereinafter, referred to also as NIPAAm) and having the NIPAAm segment at 96 mol %, when a bivalent lead ion is not added (broken line) and added (solid line) thereto. In Fig. 2, the mole concentration ratio of SPA : bivalent lead ion Pb²⁺ is 1 : 10; and the solvent used is a mixed solvent of water and methanol at a ratio of 9:1 (by volume). As apparent from the graph in Fig. 2, the copolymer used is soluble at a temperature lower than 25°C and precipitates at a temperature higher in both cases.

The transition temperature at the boundary of solubilization and precipitation varies according to the ratio of the thermosensitive segment (b) and generally rises when the content of the segment (b) is increased. For example, the copolymer comprising each segment in Fig. 2 containing NIPAAm in an amount of 99 mol % or more has a transition temperature of 32°C. It is preferable to set the composition of segment (b), segment ratio, the kind of the hydrogen-bonding solvent other than water, and the like, properly so that the transition temperature becomes 0°C to 100°C, more preferably 10 to 40°C, from the point of processability. In addition, the transition temperature varies occasionally according to the concentration of added metal ion.

In the adsorbent according to the present invention, the content of the thermosensitive segment (b) in the copolymer is not particularly limited, but preferably 50 mol % or more, for example, when it is a random copolymer. In such a case, i.e., at a content of 50 mol % or more, the copolymer shows thermal response in various solvents at a sufficiently practical transition temperature.

On the other hand, decrease in the content of the spiropyran segment (a), which contains a unit to form a complex with metal ion, leads to decrease in the amount of metal ions complexed. Thus, the content of the spiropyran segment in the copolymer is selected properly according to the thermal-response and complex-forming abilities. For example, the content of the segment (a) in a copolymer consisting both segments (a) and (b) is equivalent to the molar fraction n described above.

Although the adsorbent having a copolymer containing the segments (a) and (b) and showing thermal response of precipitation and solubilization is so far described, the adsorbents according to the present invention also include adsorbents that shows reversibly a heat-response phase transition of swelling in a hydrogen-bonding solvent at a temperature lower than the transition temperature and contraction while releasing liquid and reducing its volume at a temperature higher than the transition temperature, while keeping its optically responding ability. Such copolymers include copolymers prepared by polymerization in the presence of a crosslinking agent. Any one of commonly used crosslinking agents such as alkyl dimethacrylates may be used as the crosslinking agent in a range that does not impair the action of adsorbent. The copolymers according to the present invention prepared by polymerization in the presence of a crosslinking agent are generally gels that are insoluble in water.

The light- and heat-response adsorbent according to the present invention may contain only the copolymer or may contain additionally, for example, a component such as photosensitizer in a range that does not inhibit the optical and thermal responding abilities of the copolymer.

The copolymer may contain other segments as needed. Examples thereof include compounds having an ethylenic unsaturated group, thermally responding segments having a structure other than (b), and the like.

The method of recovering a soluble substance according to the present invention is characterized by recovering the soluble substance from a solution containing the soluble substance into a recovery solvent by using the adsorbent according to the present invention.

An example of the flows for the method of metal-ion recovery by using the light- and heat-response adsorbent are summarized in Table 1.

**Table 1**

| | | Step 1 Solution of adsorbent (low temperature) | Step 2 Insolubil ization of adsorbent (high temperature) | Step 3 Addition of metal ion (complex formation ) and solid -liquid separation | Step 4 Addition into recovery solution (solubili zation) | Step 5 Release of metal ion by photoirra diation | Step 6 Insolubil ization (precipitation) and solid -liquid separation |
|---|---|---|---|---|---|---|---|
| Thermal response ability | With respect to transition temperature | Low temperature | High temperature | High temperature | Low temperature | Low temperature | High temperature |
| | Precipitation (insoluble)/s olubilization (soluble) | Solubilization | Precipitation | Precipitation | Solubilization | Solubilization | Precipitation |
| Optical response ability | Visible light irradiation | In dark place | In dark place | In dark place | In dark place | Irradiation | Irradiation |
| | Adsorption/re lease of metal ion | - | - | Adsorption | Adsorption | Release | Release |
| | Color development | Blue | Turbid blue | Turbid yellow | Yellow | Colorless | Turbid white |

A method of recovering a metal ion by using an adsorbent having a thermal response showing a phase transition between solubilization and precipitation will be described as an example of the method of recovering a soluble substance according to the invention, with reference to Table 1 above.

The example of the recovery method is a method comprising a step of preparing a solution of a light- and heat-response adsorbent according to the present invention in dark place and at a temperature lower than the transition temperature (step 1 in Table 1),
a step of precipitating the copolymer in the adsorbent in the liquid by heating it in dark place at a temperature higher than the transition temperature (step 2 in Table 1) and then forming the precipitated copolymer complex with an added metal ion in the liquid (step 3 in Table 1) or
a step of forming the copolymer complex with the added metal ion in the adsorbent solution in dark place and at a temperature lower than the transition temperature, and then precipitating the complexed copolymer at a temperature higher than the transition temperature in the solution by heating,
a step of separating the precipitated complexed copolymer from the solution continuously at the high temperature (step 3 in Table 1),
a step of dissolving the separated copolymer in a solvent into a homogeneous solution by cooling it to a temperature lower than the transition temperature (step 4 in Table 1),
a step of liberating the metal ion from the copolymer by irradiating the solution with visible light at a temperature lower than the transition temperature (step 5 in Table 1),
a step of precipitating the copolymer by heating the solution to a temperature higher than the transition temperature while irradiating the solution with visible light continuously (step 6 in Table 1), and
a step of separating the precipitated copolymer from the solvent while irradiating the solution with visible light at the high temperature continuously (step 6 in Table 1).

Thus, an example of the method of recovering a soluble substance according to the present invention is a method including
a step (A) of preparing an adsorption compound by making a soluble substance adsorb onto a copolymer in the adsorbent according to the present invention in a liquid,
a step (B) of separating the adsorption compound from the liquid by solid-liquid separation,
a step (C) of adding the separated adsorption compound into a recovery solvent,
a step (D)of liberating the soluble substance from the copolymer with use of the optically responding ability, and
a step (E) of removing the copolymer from the recovery solvent.

For example, when the copolymer shows a thermal response of solubilization and precipitation, as shown in Table 1, the steps (A) to (C) are performed in dark place;
the adsorption compound precipitated in the solvent at a temperature higher than the transition temperature is collected by solid-liquid separation in the step (B); and as in the step 4 of Table 1, the separated adsorption compound is dissolved in the recovery solvent at a temperature lower than the transition temperature in the step (C).

Then in the step (D), the soluble substance is liberated from the copolymer by irradiation with visible light on the adsorption compound dissolved in the recovery solvent at a temperature lower than the transition temperature, as in the step 5 of Table 1. The adsorption compound, which is in the dissolved state, can absorb the light efficiently.

Then in the step (E), the dissolved copolymer is precipitated while heating the recovery solvent at a temperature higher than the transition temperature and removed by solid-liquid separation, while irradiating with visible light continuously as in the step 6 of Table 1.

If the adsorption in the step (A) above is performed in the dissolved state, the adsorption compound obtained can be precipitated in the liquid by heating it at a temperature higher than the transition temperature in dark place continuously from the step (A), while if the adsorption in the step (A) is performed in the precipitated state, the copolymer can be precipitated previously before the step (A) by heating the solution containing the dissolved copolymer in dark place to a temperature higher than the transition temperature, as in the step 2 of Table 1.

On the other hand, when the copolymer has a thermal response of swelling and contraction, the temperature is not particularly limited because the copolymer is insoluble independent of temperature, and the recovery method is simplified, for example, to the following steps (A1) to (E1).

Thus, the recovery method include steps (A1) to (C1) performed in dark place,
a step (A1) of preparing an adsorption compound by making a soluble substance adsorb onto a copolymer in the adsorbent according to the present invention in a liquid,
a step (B1) of separating the adsorption compound from the liquid by solid-liquid separation,
a step (C1) of adding the separated adsorption compound into a recovery solvent,
a step (D1) of liberating the soluble substance from the copolymer by irradiation with visible light, and
a step (E1) of removing the liberated swollen or shrunk copolymer from the recovery solvent by the solid-liquid separation while continuous irradiating with visible light.

In the step (D1) above, it is preferable to irradiate visible light on the swollen copolymer at a temperature lower than the transition temperature, because the soluble substance is released more easily from the copolymer having an increase surface area by swelling.

It is also preferable to make the copolymer contract by heating at a temperature higher than the transition temperature in the step (E1) for decreasing the amount of the solvent contained in the adsorbent.

The change of the adsorbent when a bivalent lead ion is adsorbed on an adsorbent containing a copolymer of 1',3',3'-trimethyl-6-(acryloyloxy)spiro(2H-1-benzopyran-2,2 '-indole) and N-isopropylacrylamide will be described below, with reference to the Formula (2), as an example of the favorable embodiment of the method of recovering a soluble substance.

### (Adsorbent solution-preparing step)

First, a liquid mixture of methanol and water (1:9, by volume) and the adsorbent are mixed at a temperature lower than the transition temperature; and the copolymer in the adsorbent is dissolved, to give a bluish aqueous solution (hereinafter, referred to as solution 1). The color indicates presence of a merocyanine structure stable to some extent in the copolymer.

The solvent penetrates into every part of the adsorbent, while the adsorbent is dissolved completely in a solvent at a temperature lower than the transition temperature and in dark place in this way.

The copolymer is then insolubilized by heating the solution 1 in dark place to a temperature higher than the transition temperature, giving a precipitate (hereinafter, referred to as solution 2).

The dark place is not limited, and may be any place up to the luminosity close to that under normal indoor light, independent of whether a metal ion is present.

### (Metal ion-adsorbing (complex-forming) step)

An aqueous solution of bivalent lead ion is then added to the solution 2 and the mixture is stirred still in dark place and at the high temperature. The lead ion is adsorbed on the merocyanine structure and forms a complex as shown in Formula (2). The copolymer forms a complex as it is precipitated at the high temperature. The color of the copolymer changes rapidly from blue to yellow.

The copolymer forming a complex with the metal ion may be present in the dissolved state at the low temperature as in solution 1 or in the precipitated state at the high temperature as in the solution 2 described above. In other words, the step of precipitating the polymer in the liquid by heating at the high temperature may be before or after the complex-forming step. The copolymer in the complex-forming step is preferably dissolved from the point of complex-forming efficiency, and preferably precipitated in the next separation and recovery step from the point of processability.

If the adsorbent complexed with a metal ion is in the dissolved state after completion of the complex-forming step or if the precipitation is incomplete, the liquid is heated to a temperature higher than the transition temperature while kept in dark place. In this manner, it is possible to insolubilize the complexed copolymer (adsorption compound in which the metal ion and the copolymer are forming a complex) and to prepare a sufficient amount of precipitate in the liquid.

### (Adsorbent-separating step)

The yellow precipitate is separated from liquid and placed in a water bath for recovery while kept in dark place and at a temperature higher than the transition temperature.

### (Deposit-solubilization step)

The separated precipitate is then mixed with a metal recovery solvent in the water bath kept in dark place, and cooled to a temperature lower than the transition temperature. The precipitate (complexed copolymer) is dissolved by cooling, to give a yellow transparent solution.

### (Metal ion-releasing step)

The solution is then irradiated with a visible light (e.g., having a wavelength of >420 nm) still at a temperature lower than the transition temperature. By the visible light irradiation, the copolymer photoisomerizes from in the merocyanine structure to in the spiropyran structure, in the leftward direction in Formula (2) above, and the lead ion complexed with the copolymer is released into the solution at the same time.

Thus, the solution becomes transparent and colorless.

The precipitate solubilization may be performed simultaneously or before the photoirradiation.

### (Metal ion-recovering step)

When the solution is heated to a temperature higher than the transition temperature while it is irradiated continuously with visible light, the copolymer becomes insoluble and gives white precipitate while leaving the lead ion liberated. When the solution is subjected to solid-liquid separation as it is kept the temperature and irradiation continuously with visible light, the lead ion remains in the liquid and recovered, and the separated copolymer precipitate can be reused for recovery of lead ion in a new aqueous lead-ion solution similarly.

As described above, adsorption and release of the metal ion can be determined by visual observation of the color and its density.

The colors indicated in the embodiment and Table 1 are those determined when a solution of methanol and water (1:9) is used for complex formation, and, for example when only water is used, the solution 1 in the adsorbent solution-preparing step (step 1 in Table 1) develops a red purple color, while the solution 2 in the same step (step 2 in Table 1) a turbid white color.

As described above, the copolymer is preferably insoluble or hardly soluble in the complex-forming liquid and recovery solvents at a practical temperature higher than the transition temperature; examples for the liquid and the solvent include hydrogen-bonding solvents such as water and alcohols; and preferable are solvents that interact with the segment (b) by hydrogen bonding.

The processing in the complex-forming step (A) is not particularly limited, and examples of the methods include, in addition to the method above of adding an aqueous metal-ion solution to a solution of an adsorbent in a hydrogen-bonding solvent, an opposite method of adding the copolymer to the aqueous metal-ion solution and a method of making a metal-ion solution in contact with an adsorbent continuously for example by using a column.

Because the optically responding ability of an adsorbent solution containing the copolymer is dependent on the irradiation period as well as the irradiation strength of the light, it is possible to control the release velocity of the metal ion from the copolymer,for example,by adjusting the irradiation strength and exposure period of visible light.

In addition, the solution may be irradiated with UV light, instead of being placed in dark place, and in such a case, ultraviolet irradiation is terminated when visible light is irradiated again.

The soluble substances to be recovered from solution by adsorption with the adsorbent and by the recovery method according to the present invention include metal or metal complex ions; and typical examples of the metals include lead, zinc, copper, nickel, palladium, lithium, cadmium, arsenic, chromium, mercury, beryllium, vanadium, manganese, cobalt, iron, gold, silver, platinum, and the like; and the valency of the metal is not limited, although a bivalent ion is shown in Formula (2). Thus, examples thereof include bivalent ions such as lead, zinc, copper, and nickel, and trivalent ions such as palladium. Further, amino acids such as glycine and alanine and hydrogen ion can also be recovered.

Described so far is a case where 1',3',3'-trimethyl-6-(acryloyloxy)spiro(2H-1-benzopyran-2,2 '-indole) as a spiropyran acrylate (hereinafter, referred to also as SPA) and N-isopropylacrylamide (hereinafter, referred to also as NIPAAm) are used, but the copolymer shown Formula (1) having other spiropyrans and other (meth)acrylates have similar ability to adsorb soluble substances in response to light and heat. In addition, the spiropyran used is a compound having a segment (a) of Formula (1) in which X is a carbon atom and Y is an oxygen atom, but compounds having a different combination of X and Y may also have the ability. Copolymers having a segment (b) other than NIPAAm also show similar thermal response, although there is some difference in the transition temperatures of the copolymers.

On the contrary, the phase transition in thermal response may be precipitation or shrinkage at a temperature lower than the transition temperature and solubilization or swelling at a temperature higher than the transition temperature; and the phase transition in optical response may be adsorption by ultraviolet photoirradiation and release by visible light irradiation or in dark place.

### (Example 1)

Hereinafter, the present invention will be described specifically with reference to Examples, but it should be understood that the present invention is not restricted by the Examples.

### [Preparation of spiropyran acrylate (SPA)]

(1) 4.72 g (0.0161 mol) of 1',3',3'-trimethyl-6-hydroxyspiro(2H-1-benzopyran-2,2'-indo le) (manufactured by ACROS ORGANICS, purity: 99%, Fw: 293.37, product number: 42192-0050) was dissolved in 28.3 milliliters of toluene [manufactured by Kanto Kagaku Co. Inc. (used after distillation), analytical grade, purity: 99.5%, boiling point: 110.625°C].

(2) 1.59 g (0.0176 mol) of acrylic chloride (manufactured by Tokyo Kasei Kogyo Co. Ltd. , product number: A0147 (used after distillation), Fw: 90.51) was dissolved in 14.2 milliliters of toluene (ditto).

(3) Separately, 1.79 g (0.0114 mol) of triethylamine (hereinafter, referred to as TEA) [manufactured by Wako Pure Chemical Industries, Ltd. (used after distillation), purity: 99%, product number: 202-026461 was made available. In addition, five units of ammonia water, one unit thereof being a solution of 400 milliliter of ammonia (manufactured by Kanto Kagaku Co. Inc., purity 28.0 to 30.0%, product number 01266-00) in 100 milliliters of purified water, was made available.

(4) The toluene solution of the spiropyran obtained in (1) above and TEA of (3) were placed in a two-necked round-bottomed flask, and a ball condenser was connected to one neck of the two-necked round-bottomed flask and a cylindrical separating funnel was connected to the other neck. While the two-necked round-bottomed flask was kept at 60°C, the toluene solution of acrylic chloride obtained in (2) was added dropwise, gradually from the cylindrical separating funnel, and the mixture was allowed to react for 15 hours. Hydrochloric acid generated in the reaction was neutralized with TEA. After 15 hours, the reaction solution was diluted with 100 milliliters of toluene and the mixture was transferred into the separating funnel, and 1 unit of the aqueous ammonia solution of (3) was added thereto, for removal of the unreacted acrylic chloride and TEA from the reaction solution. After the separating funnel was shaken and left still, the lower aqueous ammonia layer was removed; remaining 1 unit of aqueous ammonia solution of (3) was added thereto; and, in this manner, the extraction was repeated for a total of five times.

(5) 100 milliliters of purified water, replacing the aqueous ammonia solution, was added, and the extraction was repeated for a total of five times similarly until the pH of the solution became 7.

(6) The upper layer liquid in the separating funnel was vaporized in an evaporator for removal of toluene and then dried under reduced pressure. The brown solid thus obtained was dissolved in dichloromethane, and the impurities therein were separated by column chromatography. The column used was silica gel (manufactured by Kanto Kagaku Co. Inc., product number: 9385-4M, Rf: 0.86), and the eluent used was dichloromethane.

(7) The eluent dichloromethane from the column was vaporized in an evaporator, and the residue was dried under reduced pressure, to give 3.10 g of a SPA monomer, 1',3',3'-trimethyl-6-(acryloyloxy)spiro(2H-1-benzopyran-2,2 '-indole) shown in the following Formula (3) (yield 66%). SPA obtained was analyzed with ¹H-NMR and the result is shown in Fig. 1. The signals α, β, and γ in Fig. 1 correspond respectively to the structure at the α, β, and γ positions in Formula (3).

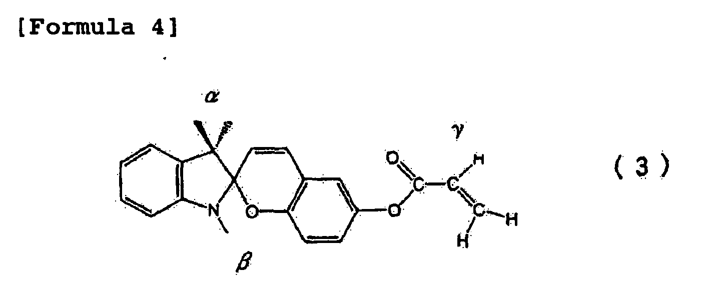

### (Preparation of copolymer)

66 mg (0.19 mmol) of the monomer SPA obtained above, 1',3',3'-trimethyl-6-(acryloyloxy)spiro(2H-1-benzopyran-2,2 '-indole) (molecular weight: 347.41) was made available. Separately, 566 mg (5.0 mmol) of N-isopropylacrylamide (NIPAAm) (molecular weight 113.15) was made available.

In addition, 3 milliliters of ethanol, 8.4 mg of an polymerization initiator AIBN (1/100 with respect to the total mole number of SPA and NIPAAm), 3.75 mg of a polymerization inhibitor hydroquinone (manufactured by Tokyo Kasei Kogyo Co. Ltd., 99.0%, product number: H0186), and diethylether were made available.

First, two kinds of solutions obtained by dissolving SPA in 2 milliliters of ethanol and NIPAAm in 1 milliliter of ethanol were placed and mixed in a two-necked round-bottomed flask equipped with a ball condenser at one neck and a rubber-stoppered Pasteur pipette at the other.

Dry nitrogen was supplied into the flask through the Pasteur pipette for 30 minutes, removing the moisture and air in the flask.

The polymerization initiator was,added thereto; after supply of dry nitrogen for 20 minutes, the mixture was allowed to react while the flask was heated in an oil bath to a temperature of 60°C and kept at the same temperature additionally for 3 hours; and the reaction was terminated by addition of the polymerization inhibitor.

The reaction product in the flask was added dropwise into a great amount of diethylether gradually, making the polymer therein precipitate and purified. The precipitate was filtered with a filter paper and dried under reduced pressure, to give 281.7 mg of a copolymer of 1',3',3'-trimethyl-6-(acryloyloxy)spiro(2H-1-benzopyran-2,2 '-indole) and N-isopropylacrylamide (hereinafter, referred to as P(SPA-NIPAAm))(yield: 45%). Calculation of the molar ratio of each segment in the copolymer from the result of integral value of ¹H-NMR resulted showed a SPA:NIPAAm ratio of 4:96 (spiropyran segment content: 4 mol %). The copolymer had an Mw of 63,000 and an Mw/Mn of 35.

### (Measurement of thermosensitivity of copolymer)

10 mg of the copolymer P(SPA-NIPAAm) containing 4 mol % SPA segment thus obtained was added to a mixed solvent of 1 milliliter of methanol and 9 milliliters of purified water (hereinafter, referred to as solution A).

Pb (II), as lead perchlorate trihydrate, was added to the solution A thus obtained, to make a mixed solution containing SPA and bivalent lead ion Pb²⁺ at a mole concentration ratio of 1:10 (lead ion concentration: 0.01 mM) (hereinafter, referred to as solution B).

The light transmittance of each of the solutions A and B, as determined at 10°C to 30°C and at a wavelength of 560 nm while the solution was stirred, is shown in Fig. 2. In Fig. 2, the light transmittance of solution A was drawn with a broken line, and that of the solution B with a solid line. As shown in Fig. 2, both of the solutions A and B precipitated at a temperature higher and were dissolved at a temperature lower than 25°C.

### (Complex formation and light-responding release of lead ion)

The absorbance curve of solution B containing lead ion, as determined at 10°C, is shown in Fig. 3. Absorption in dark place is indicated by a solid line, while that during visible light irradiation by a broken line; and the middle between them with a dotted line. The solution B had an absorption band at 435 nm and developed a yellow color in dark place, which indicates that the copolymer formed a complex with lead ion (adsorption) in the solution. In addition, irradiation with a visible light (>420 nm) resulted in disappearance of the absorption band, which indicates that the adsorbed lead ions are released. Complete disappearance of the absorption band indicates that the adsorbed lead ions can be released and recovered entirely by visible light irradiation. The color change was observed repeatedly when the solution was photoirradiated and placed in dark place alternately.

### (Adsorption and Desorption rate of lead ion)

A calibration curve between current and concentration was obtained by using a rectangular-wave voltammetry (SWV) and aqueous lead-ion solutions at Pb²⁺ concentrations of 10, 20, 30 and 40 µM.

Then, aqueous 40-µM Pb²⁺ solution was analyzed by SWV at 10°C in dark place. The reduction potential and reduction current, as determined by using silver/silver chloride electrodes, are plotted in the graph shown in Fig. 4 by curve a.

The copolymer P(SPA-NIPAAm) solution (solution A) was added to the aqueous 40-µM Pb²⁺ solution at a mole concentration ratio of Pb²⁺ to SPA of 1:1 (hereinafter, referred to as solution C). The solution C was heated from 10°C to 40°C and filtered in dark place, giving a filtrate. The filtrate was analyzed by SWV in dark place at 10°C. The results are shown in the graph of Fig. 4 by curve b.

The solution C was heated and filtered similarly under irradiation with visible light, to give a filtrate. Thefiltrate was analyzed by SWV in dark place at 10°C. The results are plotted in the graph shown by curve c in Fig. 4.

As shown by curve a in Fig. 4, reduction potential of the aqueous 40-µN Pb²⁺ solution was -0.504V, and the reduction current was 4.74 µA. As shown by curve b in Fig. 4, the reduction current of the solution obtained by heating and filtration of solution C in dark place was 0.99 µA; the Pb²⁺ concentration in the solution calculated from the calibration curve was 2.24 µM; and the adsorption rate was 95%. As shown by curve c in Fig. 4, the reduction current of the solution obtained by heating and filtration of solution C under visible light irradiation was 2.87 µA; the Pb²⁺ concentration in the solution calculated from the calibration curve was 18.4 µM; and the release efficiency was 40%.

The optically-responding complex formation was observed reversibly by SWV.

Separately, combination of ultraviolet/visible absorption spectrum measurement and SWV also confirmed the photoreversible complex formation.

Thus, reversible phase transition of the copolymer P(SPA-NIPAAm) solution was confirmed.

### Industrial applicability

According to the present invention, a soluble substance can be liberated at high efficiency, because the irradiated light reach the dissolved or swollen adsorbent sufficiently while the soluble substance to be recovered such as metal ion is adsorbed. It is possible to recover the soluble substances in simpler operation because it is possible to control precipitation and solubilization of the adsorbent easily. It is also possible to use the adsorbent repeatedly after the soluble substrate is released and thus, repeat the operation at low cost. Further, it is possible to simplify the soluble substance-recovering step by making the copolymer in the adsorbent an insoluble gel that swells and shrinks in response to temperature.

## Claims

1. A light- and heat-response adsorbent, having an optically responding ability reversibly showing transition to adsorption and release of a soluble substance in a soluble-substance solution in response whether light irradiated or not and a thermally responding ability reversibly showing transition to solubilization and precipitation, or swelling and contraction, in response to temperature.

2. The light- and heat-response adsorbent according to Claim 1, wherein the soluble substance in the solution is a metal ion, metal complex ion, hydrogen ion or amino acid, and the metal is selected from lead, zinc, copper, nickel, palladium, lithium, cadmium, arsenic, chromium, mercury, beryllium, vanadium, manganese, cobalt, iron, gold, silver, and platinum.

3. The light- and heat-response adsorbent according to Claim 1, wherein the soluble substance in the solution is a metal ion and the metal is selected from lead, zinc, copper, nickel, and palladium.

4. The light- and heat-response adsorbent according to any one of Claims 1 to 3, wherein the adsorbent include a copolymer that becomes insoluble or scarcely-soluble and soluble reversibly in response to temperature and adsorbs and releases the soluble substance reversibly in response to whether light is irradiated or not in a hydrogen-bonding solvent.

5. The light- and heat-response adsorbent according to any one of Claims 1 to 3, wherein the adsorbent include a copolymer that contains a crosslinking agent and becomes swelling and contraction reversibly in response to temperature and adsorbs and releases the soluble substance reversibly in response to light irradiation in a hydrogen-bonding solvent.

6. The light- and heat-response adsorbent according to Claim 4 or 5, wherein the copolymer contains segments (a) and (b) represented by the following Formula (1): 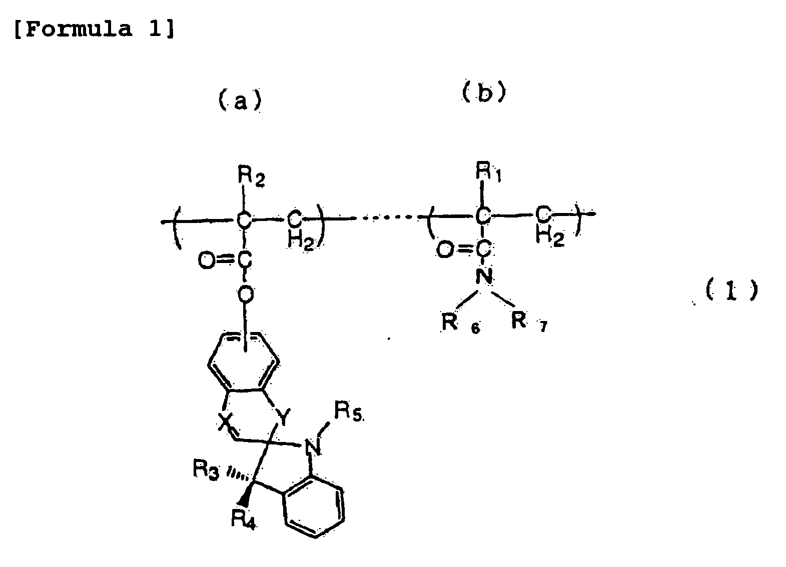 (in Formula (1), R₁, R₂, R₃ and R₄ each independently represent a H atom or a CH₃ group; R₅ represent an alkyl, hydroxyl, carboxyl, amino, aldehyde or amide group; R₆ and R₇ each independently represent a H atom, an alkyl or cycloalkyl group that may be substituted with an organic group containing hetero atoms, or R₆ and R₇ may be an alkylene group in which they are bound to each other; X represents a carbon or nitrogen atom; and Y represents an oxygen or sulfur atom).

7. The light- and heat-response adsorbent according to Claim 6, wherein R₅ in Formula (1) above represents an alkyl or amide group.

8. The light- and heat-response adsorbent according to Claim 6 or 7, wherein the copolymer is a copolymer of monomers including 1',3',3'-trimethyl-6-(acryloyloxy)spiro(2H-1-benzopyran-2,2 '-indole) and N-isopropylacrylamide.

9. A method of recovering a soluble substance, comprising:
a step of preparing a solution of the light- and heat-response adsorbent according to any one of Claims 1 to 8 in dark place and at a temperature lower than the transition temperature of the adsorbent,
a step of precipitating the copolymer in the adsorbent in the solution by heating the adsorbent solution in dark place and at a temperature higher than the transition temperature and then forming the precipitated copolymer complex with an added metal ion in the liquid or
a step of forming the copolymer complex with the added metal ion in the adsorbent solution in dark place and at a temperature lower than the transition temperature, and then precipitating the complexed copolymer at a temperature higher than the transition temperature in the solution by heating,
a step of separating the precipitated complexed copolymer from the solution continuously in dark place at the high temperature,
a step of dissolving the separated copolymer in a solvent by cooling it in dark place to a temperature lower than the transition temperature to obtain a solution,
a step of liberating the metal ion from the copolymer by irradiating the solution with visible light at a temperature lower than the transition temperature,
a step of precipitating the copolymer by heating the solution to a temperature higher than the transition temperature while irradiating the solution with visible light continuously, and
a step of separating the precipitated copolymer from the solvent while irradiating the solution with visible light at the high temperature continuously.

10. The method of recovering a soluble substance according to Claim 9, wherein the aqueous metal-ion solution and the solution of the light- and heat-response adsorbent in the hydrogen-bonding solvent are mixed in the complex-forming step.

11. A method of recovering a soluble substance, comprising recovering a soluble substance from a solution containing the soluble substance into a recovery solvent by using the light-and heat-response adsorbent according to any one of Claims 1 to 8.

12. The method of recovering a soluble substance according to Claim 11, comprising:
a step (A) of preparing an adsorption compound by making the soluble substance adsorb onto the copolymer in the light-and heat-response adsorbent in the liquid,
a step (B) of separating the adsorption compound from the liquid by solid-liquid separation,
a step (C) of adding the separated adsorption compound into a recovery solvent,
a step (D) of liberating the soluble substance from the copolymer with use of the optically responding ability, and
a step (E) of removing the copolymer from the recovery solvent.

13. The method of recovering a soluble substance according to Claim 12, wherein the soluble substance is liberated by irradiation with visible light on the adsorption compound dissolved or swollen in the recovery solvent at a temperature lower than the transition temperature of the adsorbent in the step (D) of liberating the soluble substance from the copolymer.

14. The method of recovering a soluble substance according to Claim 12 or 13, wherein:
the steps (A) to (C) are performed in dark place;
the adsorption compound precipitated in the solvent at a temperature higher than the transition temperature is collected by solid-liquid separation in the step (B);
the separated adsorption compound is dissolved in a recovery solvent at a temperature lower than the transition temperature in the step (C); and
the dissolved copolymer is precipitated by heating the recovery solvent at a temperature higher than the transition temperature and collected by solid-liquid separation while irradiated with visible light continuously in the step (E).

15. The method of recovering a soluble substance according to Claim 12 or 13, wherein the steps (A) to (C) are performed in dark place; and the liberated swollen or shrunk copolymer is removed by solid-liquid separation while irradiated with visible light continuously in the step (E).

16. The method of recovering a soluble substance according to Claim 12, 13 or 14, further comprising:
a step of precipitating the obtained adsorption compound by heating it at a temperature higher than the transition temperature in dark place after the step (A) or
a step of precipitating the copolymer by heating the solution containing the dissolved copolymer to a temperature higher than the transition temperature in dark place before the step (A).

17. The method of recovering a soluble substance according to Claim 12, 14 or 15, wherein an aqueous solution of soluble substance and a solution of the light- and heat-response adsorbent in a hydrogen-bonding solvent are mixed in the step (A).

18. The method of recovering a soluble substance according to any one of Claims 11 to 17, wherein the soluble substance to be recovered is a metal ion, metal complex ion, hydrogen ion or amino acid, and the metal is selected from lead, zinc, copper, nickel, palladium, lithium, cadmium, arsenic, chromium, mercury, beryllium, vanadium, manganese, cobalt, iron, gold, silver, and platinum.
